# EUROPEAN PATENT SPECIFICATION

(11) **EP 0 627 634 B1**
(45) Date of publication and mention of the grant of the patent: **06.09.2000**
(21) Application number: 94201291.5
(22) Date of filing: 09.05.1994
(51) Int. Cl.: G01S 13/93, G01S 13/34, G01S 13/58

(54) **Vehicle obstruction detection system**
Hindernis-Entdeckungssystem für Fahrzeuge
Système de détection d'obstacles pour véhicule

(30) Priority: 01.06.1993 US 69470
(43) Date of publication of application: 07.12.1994
(73) Proprietor: DELCO ELECTRONICS CORPORATION, Kokomo Indiana 46902 (US)
(72) Inventor: Zhang, Zhaohong, Kokomo, Indiana 46902 (US); Liem, Fie An, Carmel, Indiana 46032 (US); Shorkey, Michael John, Noblesville, Indiana 46060 (US)
(74) Representative: Denton, Michael John

(56) References cited:
- EP-A- 0 508 765
- FR-A- 2 255 610
- US-A- 4 916 450

## Description

This invention is related to a vehicle obstruction detection system and to a method of discriminating between hazardous and non-hazardous obstructions, for example for discriminating hazardous objects from various non-hazardous objects and/or clutter commonly encountered in typical automotive environments.

Many attempts have been made to provide reliable discrimination of obstructions in the path of a vehicle. Many of these attempts have used vehicular radar systems which provide data relating to the range of the obstruction and relative velocity between the obstruction and the vehicle. The operating environment of an automotive radar system presents many challenges to the system designer, among the most troublesome being differentiation between hazardous and non-hazardous obstructions, both of which return transmitted radar signals. Typical non-hazardous obstructions include road signs, bridges, fences, guardrails and the like. Poor discrimination of such non-hazards from hazards limits the effectiveness and reliability of such automotive radar systems.

Various attempts have been made to remedy the above shortfalls. One such attempt includes limiting the range and pattern width of signal transmission and reception, however, this also undesirably limits the area of detection. This is an especially unattractive option where, as in a vehicle blind-zone detection radar system, a relatively wide area needs to be covered.

Other proposals for solving the above shortfalls include multiple transmitter and/or receiver configurations which are complex and costly.

Systems with variable transmitted radar pattern angle and range, responsive to steering input, have also been proposed to limit return signals from non-hazard obstructions of the type which are tangential to a vehicle's travel around a curve or bend. This technique may be useful for look-ahead or look-back radar systems where radar pattern is substantially aligned with the major axis of the vehicle but does not address the problems of blind-zone radar systems where the transmission pattern is intentionally at an angle from the major axis of the vehicle.

Additionally, relatively complicated return signal processing to separate multipath signals in frequency bands have been proposed to discriminate between several detected obstructions. FR-A-2255610 discloses a detection system in accordance with the preamble of Claims 1 and 2.

The present invention seeks to provide an improved vehicle obstruction detection system and a method of discriminating between hazardous and non-hazardous obstructions in the vicinity of a vehicle.

According to an aspect of the present invention, there is provided a vehicle obstruction detection system as specified in claim 1.

It is possible to provide accurate discrimination of hazardous obstructions from non-hazardous obstructions, without substantial or complex hardware and with relatively simple processing of obstruction data. Additionally, it is possible to provide obstruction discrimination without limiting the area covered by the system.

A preferred embodiment uses a multimode radar system which provides for accurate obstruction discrimination in an automotive application. A frequency modulated continuous wave (FM-CW) portion of transmitted and received signals is utilised in the determination of apparent velocity and range of an obstruction. A continuous wave (CW) portion of transmitted and received signals is utilised in the determination of the obstruction's apparent velocity. The relationship between the range and two apparent velocities of the obstruction determine whether the obstruction is hazardous or non-hazardous.

An embodiment of the present invention is described below, by way of example only, with reference to the accompanying drawings, in which:
Figure 1 is a diagram illustrating an embodiment of vehicular blind-zone radar pattern in relation to a carrying vehicle and typical non-hazardous obstruction;
Figure 2 is a block diagram of an embodiment of vehicular radar system; and
Figures 3a and 3b are flow charts of an embodiment of program instructions executed by the system of Figure 2 for carrying out obstruction discrimination.

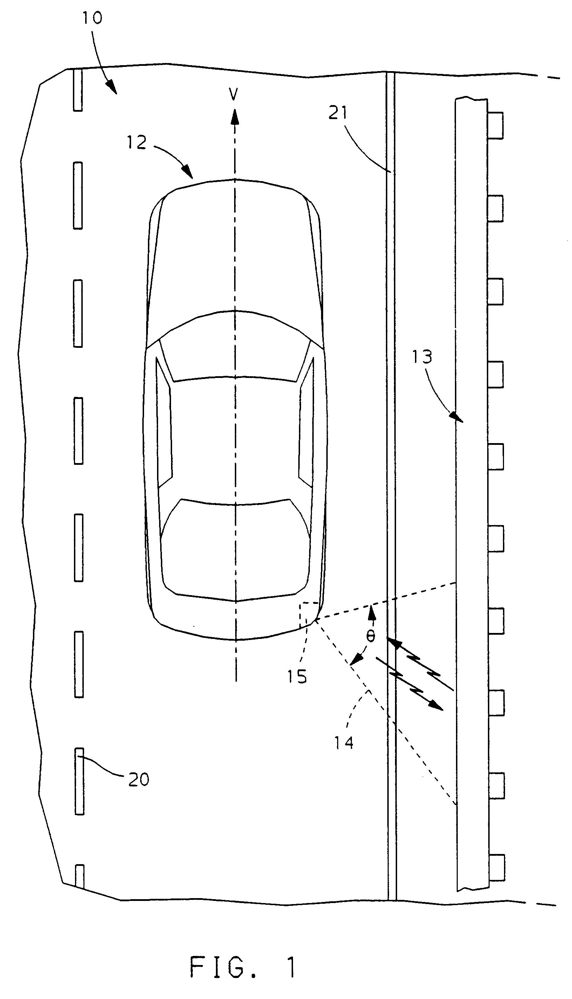

Figure 1 depicts a motor vehicle 12 travelling in a forward direction along its major axis V along a typical roadway environment generally designated 10. Lane boundaries are shown by lines 20, 21 and an extended roadside object 13 is illustrated to represent common roadway environmental elements such as guardrails, fences, infrastructure abutments and the like.

Vehicle 12 is equipped with a blind-zone radar system 15 operative to transmit and receive radio signals. The transmitted radio signals have a radiation patter 14 substantially corresponding to the main lobe thereof. Radiation pattern 14 has a spread angle θ which also substantially corresponds to the reception pattern spread angle. The radiation and reception patterns shown correspond to what is termed a vehicle blind-zone, created by obstructions and/or limited mirror viewing fields, and are intended to be used to detect the presence of hazardous objects in this zone.

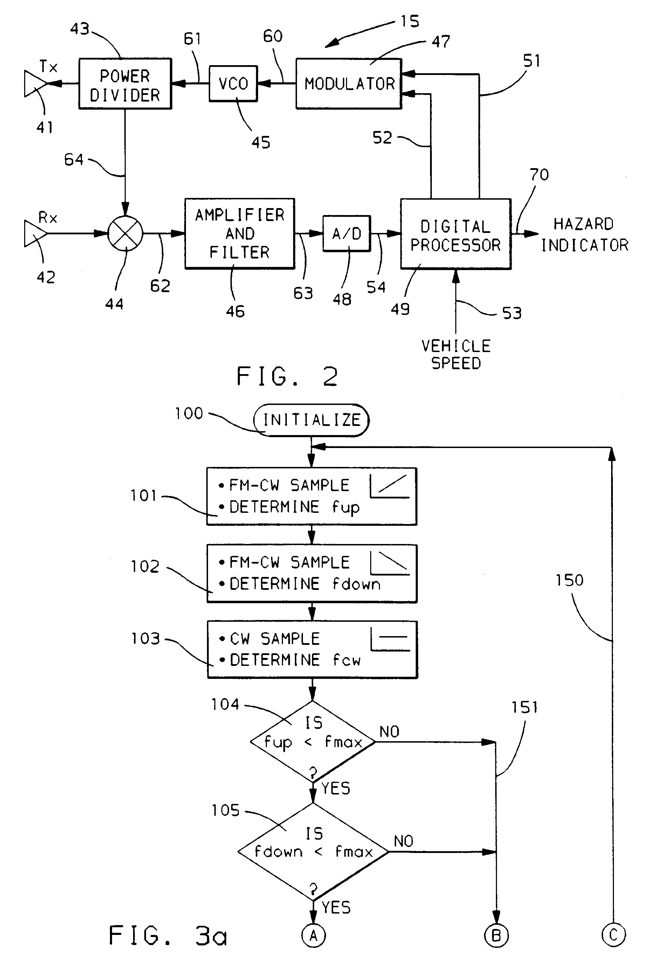

An embodiment of blind-zone radar system 15 includes (as best seen in Figure 2) a transmission antenna 41 for establishing the radio signal radiation pattern 14. Receiving antenna 42 is configured to receive reflected radio signals within substantially the same pattern established by transmission antenna 41. Modulator 47 is a multi-function modulator responsive to digital signals on control lines 51 and 52 to produce an analogue voltage output on line 60 for control of voltage controlled oscillator (VCO) 45.

Modulator 47 responds, for example, to a high logic signal on line 52 by outputting a constant DC voltage on line 60 so that voltage controlled oscillator 45 outputs a continuous wave (CW) radar signal on line 61. Modulator 47 responds to a low logic signal on line 52 by outputting a linear ramped voltage on line 60 such that voltage controlled oscillator 45 outputs a frequency modulated, continuous wave (FM-CW) radar signal on line 61. The direction of the linear ramped voltage on line 60 is dependent on the logic signal on line 51, thereby allowing both a ramped-up and a ramped-down voltage and correspondingly unique FM-CW radar signals.

The radar signal on line 61 is fed to power divider 43, at which a portion is routed to transmitting antenna 41 and another portion thereof is routed to mixer 44 via line 64. Mixer 44 also receives radar signals from receiving antenna 42, which are reflected portions of the transmitted radar signals from antenna 41. The two signals are processed in a conventional heterodyned sensor so as to produce an IF signal on line 62 at the output of mixer 44. The IF signal is amplified and filtered at unit 46 to remove low frequency and DC components therein. The output on line 63 is the frequency differential between the transmitted and received signals.

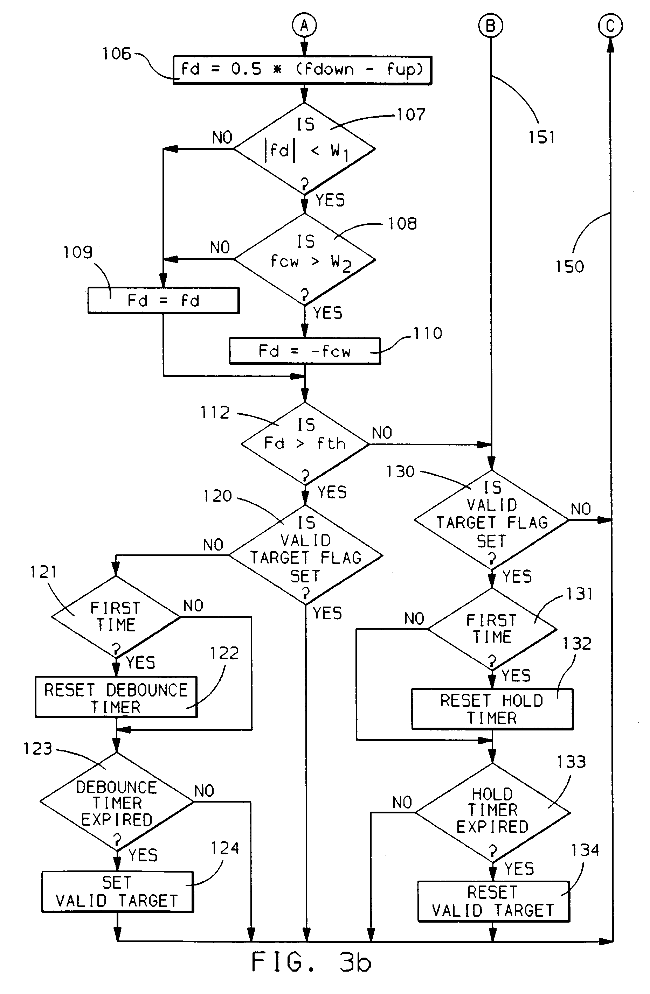

The resultant signal is digitised for processing by digital processor 49. Digital processor 49 operates on the basis of a control algorithm of the type shown in Figures 3a and 3b and described below, so as to control modulator 41 and to process conditioned radar signals to determine therefrom distance from and relative velocities of obstructions and to distinguish between hazardous and non-hazardous obstructions. Digital processor 49 comprises a central processing unit with internal clock, ROM, RAM and various digital input and output ports. In addition to control lines 51 and 52, digital output line 70 provides an indication via its logic state of the presence or absence of a hazardous obstruction. Input line 53 comprises a measure of vehicle speed to the radar system to take into account varying vehicle speeds.

Referring to the embodiment of routine shown in Figures 3a and 3b, it begins at step 100 which is executed each time the radar system operates for initialising various tables, timers, flags and the like used by the routine. Following initialisation, a group of obstruction discrimination steps 101-112 and alternative groups of obstruction acceptance steps 120-124 or obstruction rejection steps 130-134 are repeatedly executed.

Processing steps 101-103 perform radar signal transmission, reception and signal processing functions to establish well known radar data quantities. Step 101 performs a first FM-CS radar cycle including controlling modulator 47 via control lines 51 and 52 to produce transmission of an up-sweep signal according to a linear ramp in the present embodiment, reading an amplified, filtered and digitised IF signal at input line 54 and calculating therefrom the lowest order spectral component fᵤₚ such as by Fast Fourier Transform (FFT) techniques. The quantity fᵤₚ is a rough measure of range to the obstruction off which the transmitted signal was reflected. Step 102 performs a second FM-CW radar cycle but with a down-sweep signal according to a linear ramp and similarly calculates the lowest order spectral component f_{down}. Step 103 performs a continuous wave (CW) radar cycle and determines the CW doppler quantity f_{cw}. The CW doppler quantity f_{cw} is a pure doppler frequency difference without algebraic sign and thus a measure of relative obstruction velocity but not direction.

Steps 101-103 provide a portion of the data used to determine whether or not a hazardous object is in the path of the vehicle and the relationship of the position of such an object relative to the vehicle. It is here noted that the time intervals for the up-sweep and down-sweep FM-CW cycles are preferably substantially equivalent so that any doppler frequency component present in the measured quantities fᵤₚ and f_{down} can be extracted in subsequent processing steps. Other modulating waveforms, such as rising and falling portions of a sinusoidal signal, could be used in place of the chosen linear ramps. However, linear ramp modulation is preferred since it provides relatively simple discrimination between several obstructions in comparison to non-linear modulation, such as sinusoidal waveforms would provide. Alternative methods and techniques for obtaining the FM-CW and CW quantities will be apparent to the skilled person.

Steps 104 and 105 determine whether the obstruction is within a predetermined range. The quantities fᵤₚ and f_{down} may contain a doppler frequency component depending upon the relative motion between the vehicle and obstruction and thus may differ from one another. However, these quantities fᵤₚ and f_{down} provide a sufficient estimate of range for a preliminary detection of obstructions. Step 104 compares fᵤₚ to a predetermined quantity fₘₐₓ representing a maximum range of concern. If the quantity fᵤₚ is less than fₘₐₓ, then the rough measure of obstruction range represented thereby is determined to be within the range of concern and step 105 is next executed. The quantity f_{down} is similarly compared to fₘₐₓ at step 105 and if it is also less than fₘₐₓ then the obstruction is accepted as being within the range of concern and step 106 is next executed. If either fᵤₚ or f_{down} is greater than fₘₐₓ, then the current obstruction detection is immediately considered non-hazardous, no further obstruction discrimination steps need be performed and processing proceeds to obstruction rejection steps 130-134 via path 151. Alternatively, the range may be determined by comparing the average of quantities fᵤₚ and f_{down} with fₘₐₓ, which technique effectively eliminates any doppler frequency component between the two quantities averaged.

Proceeding with the assumption that the preliminary check has determined that the obstruction is within the range of concern, step 106 extracts the FM-CW doppler quantity f_{d} from the FM-CW quantities fᵤₚ and f_{down} as one half of the difference between these two quantities. The FM-CW doppler quantity f_{d} is a measure of the relative velocity of the obstruction. The FM-CW doppler quantity f_{d} may be positive or negative, a positive value being indicative of an approaching obstruction and a negative value being indicative of a receding obstruction. The first branch of a two-branched discrimination test is performed at step 107. The magnitude of f_{d} is compared to a predetermined quantity W₁ representing a minimum relative obstruction velocity which will reliably indicate whether the obstruction is potentially hazardous. Where the magnitude of f_{d} is equal to or greater than W₁, the detected obstruction is considered potentially hazardous and step 109 sets a retained doppler quantity F_{d} used in further processing to the FM-CW doppler quantity f_{d}. In the case of a roadside obstruction, for example a guard rail, the strongest reflected radar signals are perpendicular to the guard rail and thus the FM-CW doppler quantity f_{d} is a measure of the apparent velocity of the guard rail section adjacent the vehicle. Where the vehicle is closing in on the guard rail, the relative velocity between them may cause a negative response at step 107, immediately indicating a potential hazard. Alternatively, where the vehicle travel is substantially parallel to the guardrail, the relative velocity and thus the magnitude of the FM-CW doppler quantity f_{d} is correspondingly small and a positive response is made at step 107.

When the result at step 107 is positive, step 108 is next executed to compare the CW doppler quantity f_{cw} to a predetermined quantity W₂ representing a minimum obstruction velocity which will reliably indicate whether a significant difference between the FM-CW doppler quantity f_{d} and the CW doppler quantity f_{cw} is detected. In the case where the magnitude of the FM-CW doppler quantity f_{d} is small (indicating little or no apparent relative motion between the vehicle and obstruction) and the CW doppler quantity f_{cw} is also small (likewise indicating little or no apparent relative motion between the vehicle and obstruction), the detected obstruction is considered a potential hazard and step 109 sets the retained doppler quantity F_{d} to the FM-CW doppler quantity f_{d}. In the case where the magnitude of the FM-CW doppler quantity f_{d} is small (indicating no apparent relative motion between the vehicle and obstruction) and the CW doppler quantity f_{cw} is large (indicating apparent relative motion between the vehicle and obstruction), the detected obstruction is considered non-hazardous and step 110 sets the retained doppler quantity F_{d} to the algebraic negative value of the CW cycle doppler quantity f_{cw} in order to flag the detected obstruction as non-hazardous. The divergent FM-CW and CW doppler quantities are explained and resolved as follows with reference to Figure 2.

As mentioned above in relation to a situation in which the vehicle 12 is adjacent a roadside obstruction such as a guard rail, the strongest reflected radar signals are perpendicular to the guard rail. The IF signals produced during the FM-CW and CW cycles will, when processed through amplifier and filter 46, produce respective frequency signals on line 63 which are the differences in frequency between the two heterodyne-processed signals for the particular cycle. In the case of an FM-CW cycle with a roadside obstruction, the perpendicularly reflected signal will, when combined with the transmitted signal in heterodyne manner, produce an IF signal on line 62 which has a high frequency content so as to pass through the filter at 46, thus producing the dominant lowest order spectral component on line 63. Therefore, the FM-CW doppler quantity f_{d} will be small or non-existent, indicating minimal relative motion between the vehicle and the obstruction. However, in the case of a CW cycle with the same roadside obstruction, the perpendicularly reflected signal will produce an IF signal on line 62 which has minimal if any high frequency content due to the near zero frequency differential (zero doppler component) between the transmitted and the perpendicularly reflected signal, so as to be greatly attenuated through the filter 46, thus producing little if any high frequency spectral component on line 63.

The dominant lowest order spectral component on line 63 during a CW cycle is therefore the result of the doppler content of the "heterodyned" reflected and transmitted CW signals. Non-perpendicular portions of the roadside obstruction will have a relative velocity with the vehicle and thus the signal reflected thereby will combine with the transmitted signal to produce an IF signal having substantial high frequency content which will pass through the filter 46 to produce the dominant lowest order spectral component on line 63. Therefore, the CW doppler quantity f_{cw} will be large, indicating relative motion between the vehicle and the obstruction. Where the decisions at steps 107 and 108 are affirmative, divergent FM-CW and CW doppler quantities indicate a roadside obstruction which is not hazardous. As mentioned above, step 110 is then executed to generate the retained doppler quantity F_{d}, as the algebraic negative value of the CW cycle doppler quantity f_{cw}, thereby to flag the detected obstruction as non-hazardous.

After the retained doppler quantity F_{d} is set at step 109 or 110, the two paths in the routine merge to execute step 112. The retained doppler quantity F_{d} is compared to a threshold value fₜₕ representative of a closing velocity which, if exceeded, determines that the detected obstruction is hazardous. The threshold value fₜₕ is a predetermined positive value which, in the present embodiment, is a function of vehicle speed and is preferably read from a conventional two-dimensional look-up table or alternatively calculated from a formula. Additionally, other parameters such as tyre to road friction coefficients and weather conditions may be included in determining the threshold value. The threshold value fₜₕ cannot be exceeded in the case where the retained doppler quantity F_{d} was set negative at step 110, and step 112 will therefore pass processing on to a group of obstruction rejection steps 130-134. This follows since the detected obstruction has already been considered non-hazardous. The threshold value fₜₕ may or may not be exceeded in the case where the retained doppler quantity F_{d} was set at step 109, indicating a potential hazard. A receding obstruction will have a negative value for the retained doppler quantity F_{d} and cannot exceed the positive threshold value fₜₕ. An approaching obstruction on the other hand will have a positive value for the retained doppler quantity F_{d} and, depending upon its magnitude, may exceed the threshold value fₜₕ. If the threshold value fₜₕ is exceeded, then the potentially hazardous event is actually determined to be hazardous and a group of obstruction acceptance steps 120-124 is next executed. On the other hand, if the threshold value fₜₕ is not exceeded, then the potentially hazardous event is determined to be non-hazardous and a group of obstruction rejection steps 130-134 is next executed.

When the threshold value fₜₕ is exceeded, the group of obstruction acceptance steps 120-124 is executed to determine if the valid obstruction flag should be set. A set valid obstruction flag in the present embodiment indicates that a predetermined number of consecutive hazardous events has been detected.

Step 120 first determines if a valid obstruction flag is currently set. If the valid obstruction flag is set, the current hazardous event is merely cumulative, the valid obstruction flag remains set and the routine returns via line 150 to step 101 to repeat the obstruction discrimination steps. If the valid obstruction flag is not set, processing passes to step 121 which checks if this current pass through obstruction acceptance steps 120-124 is the initial pass since the last non-hazardous event was detected. If this pass represents the first time through this part of the routine, then a debounce timer is reset at step 122 and begins a count down. If this is not the first pass, the debounce timer is not reset and continues to count down. Step 123 next determines if the debounce timer has expired. An expired debounce timer indicates that a sufficient number of consecutive hazardous events has occurred to accept the current obstruction as hazardous. Therefore, if the debounce time has expired, step 124 sets the valid obstruction flag which remains set so long as the group of obstruction rejection steps 130-134 does not reset it.

When the threshold value fₜₕ is not exceeded or the obstruction is out of range, the group of obstruction rejection steps 130-134 is executed to determine if the valid obstruction flag should be reset. A reset valid obstruction flag in the present embodiment indicates that a predetermined number of consecutive non-hazardous events has been detected. Step 130 first determines if a valid obstruction flag is currently set. If the valid obstruction flag is not set, the current non-hazardous event is merely cumulative, the valid obstruction flag remains reset and the routine returns via line 150 to step 101. If the valid obstruction flag is set, processing passes to step 131 which checks if the current pass through obstruction rejection steps 130-134 is the initial pass since the last hazardous event was detected. If it is the first pass, a hold timer is reset at step 132 and begins a count down. If it is not the first pass, the hold timer is not reset and continues to count down. Step 133 next determines if the hold time has expired. An expired hold time indicates that a sufficient number of consecutive non-hazardous events has occurred to accept the current obstruction as non-hazardous. Therefore, if the hold time has expired, step 134 resets the valid obstruction flag, which remains reset so long as the group of obstruction acceptance steps 120-124 does not set it.

The precise process of accepting and rejecting groups of sequential hazardous and non-hazardous events disclosed above is unnecessary to the actual discrimination between hazardous and non-hazardous events which preceded it, and is only described to illustrate the preferred embodiment.

## Claims

1. A vehicle obstruction detection system for discriminating between hazardous and non-hazardous obstructions, including transmitting means (41, 43, 45, 47) for transmitting a frequency modulated continuous wave (FMCW) signal and a continuous wave (CW) signal, receiving means (42) for receiving reflections of the FMCW and CW signals reflected off an obstruction, and processing means (49) for determining a first measure of relative velocity of the obstruction based on the CW signal and its reflection, characterized by:
means (49) for determining a second measure of the relative velocity of the obstruction based on the FMCW signal and its reflection; and comparator means (49) for comparing said first and second measures and for determining that the obstruction is non-hazardous when the comparison indicates a significant difference between said first and second measures.

2. A vehicle obstruction detection system for discriminating between hazardous and non-hazardous obstructions, including transmitting means (41, 43, 45, 47) for transmitting a frequency modulated continuous wave (FMCW) signal and a continuous wave (CW) signal, receiving means (42) for receiving reflections of the FMCW and CW signals reflected off an obstruction, and processing means (49) for determining a measure of relative velocity of the obstruction based on the CW signal and its reflection, characterized by:
means (49) for determining a doppler quantity from the FMCW signal and its reflection; and identifying means (49) operative to determine that the obstruction is non-hazardous when the determined doppler quantity contradicts the determined measure of relative velocity.

3. A vehicle obstruction detection system according to claim 1 or 2, wherein the FMCW signal is linearly modulated.

4. A vehicle obstruction detection system according to claim 1, 2 or 3, wherein the FMCW and CW signals are radar signals.

## Patentansprüche

1. Fahrzeughindernis-Detektionssystem zum Unterscheiden zwischen gefährlichen und ungefährlichen Hindernissen mit einem Sendemittel (41, 43, 45, 47) zum Aussenden eines frequenzmodulierten Dauerstrichsignals (FMCW-Signals) und eines Dauerstrichsignals (CW-Signals), einem Empfangsmittel (42) zum Empfangen von Reflexionen der FMCW- und CW-Signale, die von einem Hindernis wegreflektiert werden, und einem Verarbeitungsmittel (49) zum Bestimmen eines ersten Maßes einer Relativgeschwindigkeit des Hindernisses auf der Grundlage des CW-Signals und seiner Reflexion, gekennzeichnet durch:
ein Mittel (49) zum Bestimmen eines zweiten Maßes der Relativgeschwindigkeit des Hindernisses auf der Grundlage des FMCW-Signals und seiner Reflexion, und ein Komparatormittel (49) zum Vergleichen des ersten und des zweiten Maßes und zum Bestimmen, daß das Hindernis ungefährlich ist, wenn der Vergleich einen wesentlichen Unterschied zwischen dem ersten und dem zweiten Maß angibt.

2. Fahrzeughindernis-Detektionssystem zum Unterscheiden zwischen gefährlichen und ungefährlichen Hindernissen mit einem Sendemittel (41, 43, 45, 47) zum Aussenden eines frequenzmodulierten Dauerstrichsignals (FMCW-Signals) und eines Dauerstrichsignals (CW-Signals), einem Empfangsmittel (42) zum Empfangen von Reflexionen der FMCW- und CW-Signale, die von einem Hindernis wegreflektiert werden, und einem Verarbeitungsmittel (49) zum Bestimmen eines Maßes einer Relativgeschwindigkeit des Hindernisses auf der Grundlage des CW-Signals und seiner Reflexion, gekennzeichnet durch:
ein Mittel (49) zum Bestimmen einer Dopplergröße aus dem FMCW-Signal und seiner Reflexion, und ein Identifikationsmittel (49), das dazu dient, zu bestimmen, daß das Hindernis ungefährlich ist, wenn die bestimmte Dopplergröße mit dem bestimmten Maß der Relativgeschwindigkeit in Widerspruch steht.

3. Fahrzeughindernis-Detektionssystem nach Anspruch 1 oder 2, wobei das FMCW-Signal linear moduliert ist.

4. Fahrzeughindernis-Detektionssystem nach Anspruch 1, 2 oder 3, wobei die FMCW- und CW-Signale Radarsignale sind.

## Revendications

1. Système de détection d'obstacles pour véhicule pour discriminer des obstacles dangereux et non dangereux, comportant des moyens émetteurs (41, 43, 45, 47) pour émettre des signaux d'onde continue modulée en fréquence (FMCW) et d'onde continue (CW), des moyens récepteurs (42) pour recevoir des réflexions des signaux FMCW et CW réfléchis par un obstacle et des moyens de traitement (49) pour déterminer une première mesure de la vitesse relative de l'obstacle basée sur le signal CW et sa réflexion, caractérisé par :
des moyens (49) pour déterminer une deuxième mesure de la vitesse relative de l'obstacle basée sur le signal FMCW et sa réflexion ; et des moyens formant comparateur (49) pour comparer lesdites première et deuxième mesures et pour déterminer que l'obstacle n'est pas dangereux lorsque la comparaison indique une différence sensible entre lesdites première et deuxième mesures.

2. Système de détection d'obstacles pour véhicule pour discriminer des obstacles dangereux et non dangereux, comportant des moyens émetteurs (41, 43, 45, 47) pour émettre des signaux d'onde continue modulée en fréquence (FMCW) et d'onde continue (CW), des moyens récepteurs (42) pour recevoir des réflexions des signaux FMCW et CW réfléchis par un obstacle et des moyens de traitement (49) pour déterminer une première mesure de la vitesse relative de l'obstacle basée sur le signal CW et sa réflexion, caractérisé par :
des moyens (49) pour déterminer une quantité Doppler à partir du signal FMCW et sa réflexion ; et des moyens d'identification (49) agissant pour déterminer que l'obstacle n'est pas dangereux lorsque la quantité Doppler déterminée est en contradiction avec la mesure de vitesse relative déterminée.

3. Système de détection d'obstacles pour véhicule selon la revendication 1 ou 2, dans lequel le signal FMCW est modulé de façon linéaire.

4. Système de détection d'obstacles pour véhicule selon la revendication 1, 2 ou 3, dans lequel les signaux FMCW et CW sont des signaux radar.
